# EUROPEAN PATENT APPLICATION

(11) **EP 0 945 332 A2**
(43) Date of publication of application: **29.09.1999**
(21) Application number: 99660049.0
(22) Date of filing: 22.03.1999
(51) Int. Cl.: B62K 3/00

(54) **Scooter**

(30) Priority: 26.03.1998 FI 980151 U
(71) Applicant: Helkama Velox Oy, 10960 Hanko (FI)
(72) Inventor: Korsu, Kalevi, 10940 Hanko (FI)
(74) Representative: LEITZINGER OY

(57) **Abstract**

A kickboard, comprising a front frame member (2) provided with a front wheel (3) and a handlebar (1); a rear frame member (4) provided with a rear wheel (6); and a swivel joint (5) which links the front frame member (2) and the rear frame member (4) together. Elasticity of the swivel joint (5) provides a steering with a self-centering force.

## Description

The invention relates to a kickboard, comprising:
- a front frame member, including a front wheel and a handlebar;
- a rear frame member, including a rear wheel; and
- a swivel joint, linking the front frame member and the rear frame member.

Traditionally, the front frame member of a kickboard, including a handlebar and a front wheel, has been linked to the rear frame member by means of bearings.

It has been realized in the invention that the angle of deflection required by kickboards is small, typically 15° each way and, therefore, the expensive and delicate bearings can be replaced by a swivel joint, a web hinge, which is an elastically flexible link element.

The characterizing features of the invention are set forth in the annexed protection claim 1. The non-independent protection claims disclose preferred embodiments of the invention.

The fact that the swivel joint is an elastically flexible link element provides a steering which is self-centering by a desired force. In addition, the kickboard is simple in terms of its design and attractive in terms of its price.

A few exemplary embodiments of the invention will now be described with reference made to the accompanying drawings, in which:
- fig. 1: shows one embodiment of the invention in a schematic side view,
- fig. 2: shows the embodiment of fig. 1 in a plan view,
- figs. 3A-E: illustrate more specifically one exemplary embodiment of the design of a web hinge and its linkage with the front and rear frame member of a kickboard. Sections D-D and E-E in fig. 3B are depicted in figs. 3D and 3E, respectively.
- Fig. 4: shows another embodiment of the invention in a schematic plan view,
- fig. 5: shows the embodiment of fig. 4 in a different operating position.

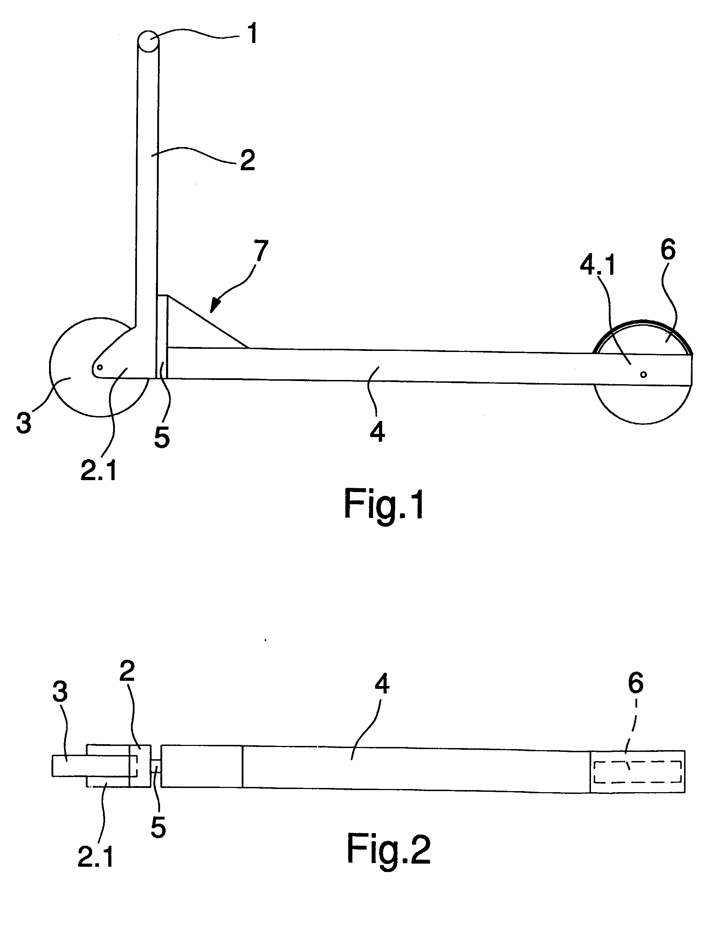

A front wheel 3 is mounted on a fork 2.1 in a front frame member 2, a handlebar 1 is mounted on the top end of the front frame member 2, and a rear wheel 6 is mounted on a fork 4.1 of the rear frame member, as shown in fig. 1.

In the embodiment of figs. 1-3, the front frame member 2 connects to the rear frame member 4 by means of an elastically flexible, sheet-like web hinge 5 fitted between the separate frame members 2, 4 in the middle thereof. The web hinge 5 constitutes a part of a link element 7 between the frame members 2 and 4. Since the web hinge component 5 of the link element 7 is elastically flexible, said link element functions as a swivel joint, although it is manufactured in a single piece which is attached to the frame members 2 and 4. The flexible swivel joint 5, made for example in rubber, plastics, or metal, replaces a sophisticated and expensive bearing system between the frame members. The flexible swivel joint 5 enables the front wheel 3 to turn at least through 15° each way, which has been found a sufficient angle of deflection for a kickboard.

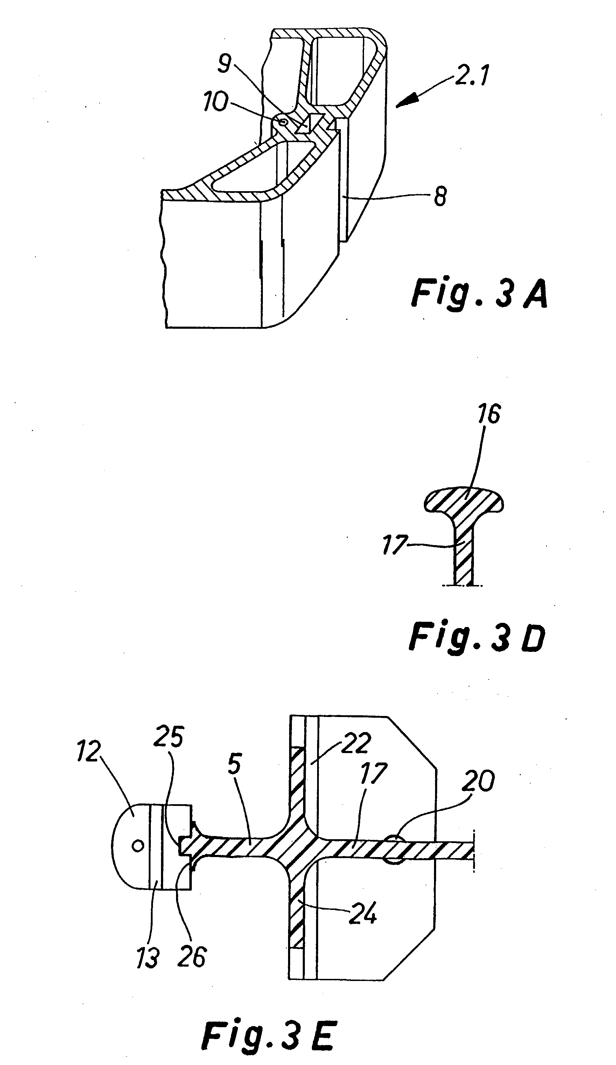

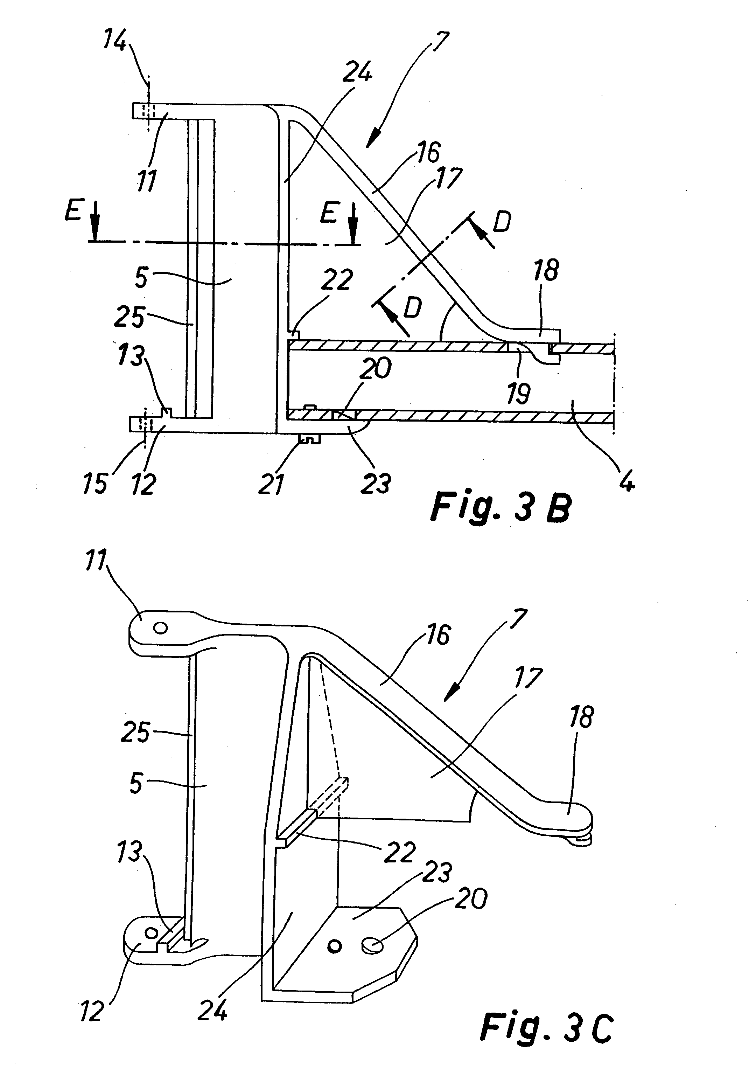

Fig. 3A depicts a front fork 2.1, made of an aluminium profile and provided with a vertical slot 8 for receiving a leading edge 25 of the web hinge 5 shown in fig. 3B. The web hinge 5 depicted in figs. 3B and 3C has its rear portion fitted with a triangular bracing assembly 16, 17, 23, 24 which includes a number of gripping protrusions 18, 20, 22 in coupling with the rear frame member 4. The hinge element 7 shown in figs. 3B and 3C is made by injection moulding in plastics, e.g. nylon, the rigidity of said material and the thickness of the web hinge 5 being selected appropriately in such a way that the web-hinge component 5 constitutes an elastic link element between the front fork 2.1 and the rear frame member 4.

The web hinge 5 has its top edge provided with a connecting lug 11 which is fastened by means of a screw 14 in a hole 10 included in the AL-profile 2.1. The web hinge 5 has its bottom edge provided with a connecting lug 12 which is fastened by means of a screw 15 in a corresponding hole included in the bottom side of the component 2.1. The connecting lug 12 is provided with a gripping rib 13 which finds its way into a cavity 9 in the profile 2.1 and builds a profiled locking which takes up tension.

The link element 7 is provided with a flange 23 which is fastened with a screw 21 to the bottom side of the frame member 4 and the gripping protrusion 20 takes up a lengthwise tensile force. The triangular bracing assembly includes a crosswise wall 24 and a lengthwise wall 17, whose upper edge may be provided with a shoulder 16 which terminates in a gripping lip 18 engaging in a hole 19 present in the frame member 4. A rib 22 bears against the top side of the leading end of the rear frame member 4. The described structure is highly capable of taking up a compressive force applied to the upper section of the element 7 and a tensile force applied to its lower section.

The leading edge 25 of the web hinge 5 is provided on either side thereof with bearing surfaces 26, which bear against the rear surface of the profile element 2.1 on either side of the slot 8.

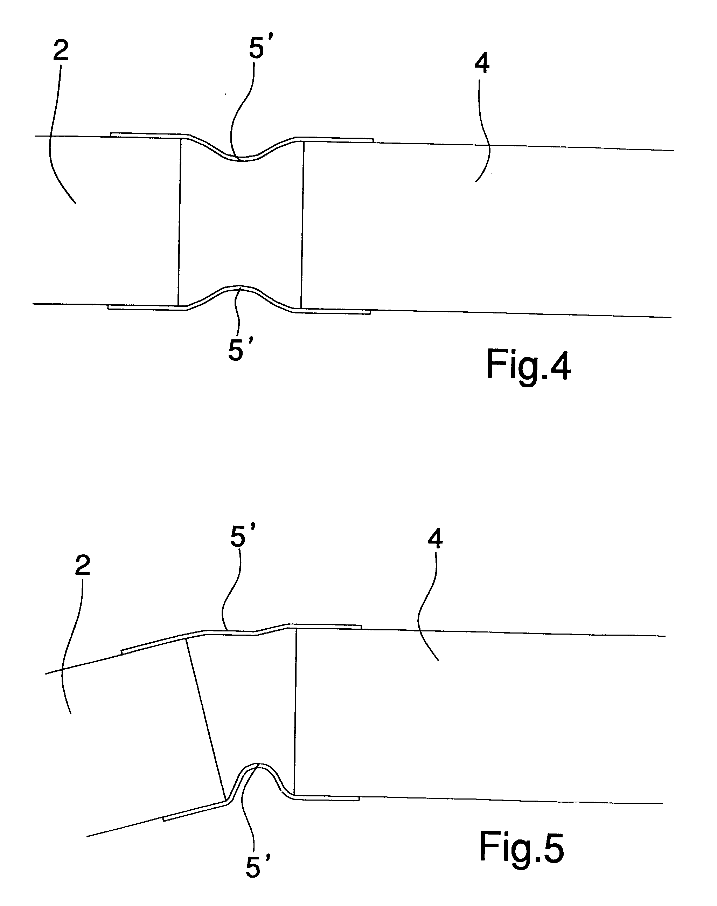

The embodiment of figs. 4-5 depicts a swivel joint 5', comprising two parallel swivel joints 5' which are spaced at a small distance, about 30-40 mm, from each other. In the illustrated embodiment, the swivel joints 5' are fastened to the outer surfaces of the front frame member 2 and the rear frame member 4.

The swivel joint 5 shown in figs. 3A-E or the swivel joint 5' shown in figs. 4 and 5 can also be termed as a web hinge. It is also beneficial to apply the invention in such a way that the swivel joint constituted by a web hinge and the front fork make up an integral element made by injection moulding in plastics, which attaches to the rear frame member 4 and also carries the front wheel 3. The integral element, including a web hinge, can be provided with necessary designs (a fork) for mounting the front wheel 3.

## Claims

1. A kickboard, comprising:
- a front frame member (2), including a front wheel (3) and a handlebar (1);
- a rear frame member (4), including a rear wheel (6); and
- a swivel joint (5), linking the front frame member (2) and the rear frame member (4),
**characterized** in that the swivel joint (5) comprises an elastically flexible link element, having an elasticity which provides a steering that is self-centering by a certain force.

2. A kickboard as set forth in claim 1, **characterized** in that the swivel joint (5) is a web-like element made in plastics or metal.

3. A kickboard as set forth in claim 1 or 2, **characterized** in that a link element (7), provided with the swivel joint (5), is rigidly secured to the front frame member (2) and the rear frame member (4).

4. A kickboard as set forth in claim 1 or 2, **characterized** in that it comprises a swivel joint (5') consisting of two parallel joint members, spaced at a small distance from each other.

5. A kickboard as set forth in claim 1, **characterized** in that the swivel joint comprises a web hinge, which is an integral element made in plastics by injection moulding, which connects to the rear frame member (4) and also carries the front wheel (3).

6. A kickboard as set forth in claim 1, **characterized** in that the front frame member (2, 2.1) is made of an aluminium profile, provided with a vertical slot (8) for receiving a leading edge (25) of the web hinge (5).

7. A kickboard as set forth in claim 1, **characterized** in that the web hinge (5) carries in its rear portion a triangular bracing assembly (16, 17, 23, 24) which is provided with gripping protrusions (18, 20, 22) in coupling with the rear frame member (4).
